# EUROPÄISCHE PATENTSCHRIFT

(11) **EP 2 849 327 B1**
(45) Veröffentlichungstag und Bekanntmachung des Hinweises auf die Patenterteilung: **11.09.2019**
(21) Anmeldenummer: 14179925.4
(22) Anmeldetag: 05.08.2014
(51) Int. Cl.: H02M 3/156, H02M 1/00

(54) **Variabler Tiefsetzer und Batterieladestation mit einem solchen Tiefsetzer**
Variable step-down converter and battery charging station with such a step-down converter
Abaisseur variable et station de chargement de batterie doté d'un tel abaisseur

(30) Priorität: 29.08.2013 DE 102013109364
(43) Veröffentlichungstag der Anmeldung: 18.03.2015
(73) Patentinhaber: Schaltbau Refurbishment GmbH, 46537 Dinslaken (DE)
(72) Erfinder: Delere, Jörg, 46535 Dinslaken (DE); Feske, André, 09392 Auerbach (DE); Gollbach, Dr. Martin, 40670 Meerbusch (DE)
(74) Vertreter: CBDL Patentanwälte

(56) Entgegenhaltungen:
- EP-A1- 2 437 386
- DE-A1-102004 036 872
- US-B1- 6 307 357
- ZHAO JUNJIAN ET AL: "Analysis of high efficiency DC/DC converter processing partial input/output power", 2013 IEEE 14TH WORKSHOP ON CONTROL AND MODELING FOR POWER ELECTRONICS (COMPEL), IEEE, 23. Juni 2013 (2013-06-23), Seiten 1-8, XP032500832, ISSN: 1093-5142, DOI: 10.1109/COMPEL.2013.6626440 [gefunden am 2013-10-09]
- WU CHEN ET AL: "DC/DC Conversion Systems Consisting of Multiple Converter Modules: Stability, Control, and Experimental Verifications", IEEE TRANSACTIONS ON POWER ELECTRONICS, INSTITUTE OF ELECTRICAL AND ELECTRONICS ENGINEERS, USA, Bd. 24, Nr. 6, 1. Juni 2009 (2009-06-01), Seiten 1463-1474, XP011261666, ISSN: 0885-8993

## Beschreibung

### TECHNISCHES GEBIET DER ERFINDUNG

Die Erfindung betrifft einen variablen Tiefsetzer und eine Batterieladestation mit einem solchen Tiefsetzer, die insbesondere zum Laden der Batterien batteriebetriebener Straßenfahrzeuge geeignet ist.

### HINTERGRUND DER ERFINDUNG

Batterieladestationen erfordern in der Regel eine Umwandlung von Netzstrom mit einer hohen Spannung in einen Ladestrom mit einer niedrigeren Spannung, die an eine Batterie angelegt wird. Moderne Batterieladestationen für batteriebetriebene Straßenfahrzeuge besitzen eine kontinuierliche Regelung der Ausgangsspannung, die für einen Batterieladezyklus optimiert wird. Für eine Umwandlung der Spannung werden variable Spannungswandler eingesetzt.

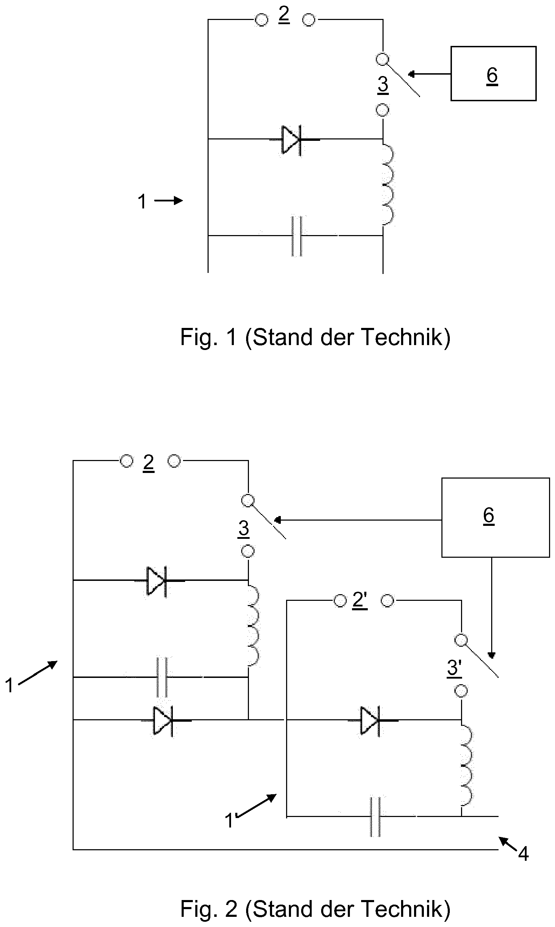

Ein auch unter den Bezeichnungen "Abwärtswandler", "Tiefsetzsteller", "Abwärtsregler", "Buck-Converter" oder kurz "Tiefsetzer" bekannter Spannungswandler mit Steuerung ist in Fig. 1 veranschaulicht. Dieser Spannungswandler ist als regelbarer Spannungswandler ausgeführt, bei dem eine Steuerung 6 mit einem Pulsweitenmodulator die ausgegebene Spannung auf verschiedene Werte regelt und nicht lediglich an- und ausschaltet. Ein Schalter 3 in Form eines signalgesteuerten Transistors ist zwischen einen Spannungseingang 2 des Spannungswandlers 1 und eine Verzweigung zu einer Diode und einer Spule bzw. Drossel geschaltet. Einem Spannungsausgang des Spannungswandlers 1 ist ein Kondensator vorgeschaltet, der an einem Ende mit der Spule und an einem anderen Ende mit der Diode und dem Spannungseingang 2 verbunden ist.

Mehrere solcher Spannungswandler 1, 1' können, wie in Fig. 2 veranschaulicht, kaskadiert werden, indem der Spannungsausgang des Spannungswandlers 1 über eine weitere Diode mit dem Spannungsausgang eines weiteren identischen Spannungswandlers 1' zusammengeschaltet wird, um einen gemeinsamen Spannungsausgang 4 der beiden Spannungswandler 1, 1' zu erhalten. Auf diese Weise kann ein Abwärtswandler aus standardisierten Spannungswandlern aufgebaut werden, wobei ein Aufbau aus zwei Spannungswandlern in Fig. 2 veranschaulicht aber auch ein entsprechender Aufbau aus mehr als zwei Spannungswandlern möglich ist. Dabei regelt eine Steuerung 6 mit einem Pulsweitenmodulator die ausgegebene Spannung über die Schalter 3, 3' der Spannungswandler 1, 1'.

Die in Fig. 1 oder 2 veranschaulichten Abwärtswandler werden für Gleichströme mit relativ geringer Leistung eingesetzt.

Bei variablen Tiefsetzern großer Leistung wie sie z.B. beim Laden von Elektrofahrzeugen benötigt werden, kommt es zu hohen Energieverlusten, die proportional zur Eingangsspannung steigen. Die Verlustleistung muss zudem aufwendig abgeführt werden, was die Gesamtkosten einer entsprechenden Ladestation erhöht.

Das Dokument Zhao Junjian et al., "Analysis of high efficiency DC/DC converter processing partial output power", 2013 IEEE 14th Workshop on Control and Modeling for Power Electronics (COMPEL), IEEE, 23. Juni 2013, Seiten 1 - 8, zeigt einen variablen Tiefsetzer nach dem Oberbegriff des Anspruchs 1.

Aus der DE 39 24398 A1 sind ein Tiefsetzer und aus der EP 2 437 386 A1 eine Hochspannungsstromversorgung bekannt, umfassend einen Spannungsausgang, erste Spannungswandler mit einem ersten Spannungseingang und einem ersten Schalter, eine erste Steuerung des Spannungswandlers mit Erfassung einer Ist-Spannung und eines Ist-Stromes an dem Spannungsausgang des variablen Tiefsetzers, Abfrage einer Soll-Spannung und Ausgabe an den Schalter des Spannungswandlers von einem ersten Steuersignal zum Angleichen der Ist-Spannung an die Soll-Spannung und einer Kaskadierung der Spannungswandler.

Die DE 10 2004 036 872 A1 zeigt eine 12-pulsige Stromrichterschaltung mit mindestens einer Trafoschaltung mit einem Phasenverschiebungswinkel derart, dass sämtliche, aus harmonischen Oberschwingungen resultierenden Ströme ungleich Null sind, mit drei Brückenschaltungen, von denen eine an eine
Trafoschaltung, eine zweite an eine Stern-/Dreieck-Schaltung und eine dritte an eine Trafoschaltung angeschlossen ist.

Die DE 10 2011 011 329 A1 zeigt einen Hochsetzsteller mit Eingängen und einem gemeinsamen Ausgang, wobei der gemeinsame Ausgang mit jedem der mehreren Eingänge jeweils über eine positive Zuleitung und eine negative Zuleitung verbunden ist, in der positiven Zuleitung und/oder der negativen Zuleitung von jedem Eingang wenigstens eine Drossel angeordnet ist und in der positiven Zuleitung und/oder der negativen Zuleitung von jedem Eingang wenigstens ein Gleichrichtelement angeordnet ist und die Eingänge mittels zwei oder mehr Schaltelementen über die Drosseln in Reihe schaltbar sind, wobei jeweils mindestens zwei der Drosseln parallel schaltbar sind.

Die DE 40 25 685 A1 zeigt einen Hochleistungssender, wobei einer dreiphasigen, primärseitigen Wicklungsanordnung eines Transformators wenigstens zwei dreiphasige, sekundärseitige Wicklungsanordnungen zugeordnet sind und jeder sekundärseitigen Wicklungsanordnung ein Brückengleichrichter mit Siebglied nachgeschaltet ist und die Spannungen der beiden sekundärseitigen Wicklungsanordnungen gegeneinander phasenverschoben sind, wobei beide sekundärseitigen Wicklungsanordnungen im Stern geschaltet sind und dass zur Phasenverschiebung die sekundärseitigen Wicklungen der einen und/oder der anderen Wicklungsanordnung teilweise jeweils an diejenige Primärwicklung der primärseitigen Wicklungsanordnung angekoppelt sind, die an sich der benachbarten sekundärseitigen Wicklung zugeordnet sind.

Die EP 1 931 023 A1 zeigt ein Gleichstromversorgungssystem mit einem ersten Transformator und einem zweiten Transformator, wobei die beiden Transformatoren primärseitig miteinander verbunden sind, mit einer mit der Sekundärseite des ersten Transformators verbundenen ersten Umrichtereinheit, mit einer mit der Sekundärseite des zweiten Transformators verbundenen zweiten Umrichtereinheit, wobei jede Umrichtereinheit einen wechselspannungsseitig mit der Sekundärwicklung des zugehörigen Transformators verbundenen Gleichrichter aufweist, wobei jede Umrichtereinheit einen gleichspannungsseitig mit dem Gleichrichter verbundenen Gleichspannungskreis und einen Tiefsetzsteller zur Schaltung von drei Schaltspannungsniveaus aufweist, welcher Tiefsetzsteller mit dem Gleichspannungskreis verbunden ist, und die Tiefsetzsteller der Umrichtereinheiten ausgangsseitig miteinander verbunden sind.

### OFFENBARUNG DER ERFINDUNG

Der Erfindung liegt die Aufgabe zugrunde, bei einem verbesserten Tiefsetzer und einer verbesserten Batterieladestation mit einem solchen Tiefsetzer wenigstens einen der folgenden Vorteile zu erreichen:
- geringe Netzrückwirkung,
- kostengünstige Bauweise bei Eignung für große Ladeleistungen,
- geringe Verlustleistung.

Die Aufgabe wird erfindungsgemäß von einem variablen Tiefsetzer mit den Merkmalen des Anspruchs 1 gelöst. Vorteilhafte Ausgestaltungen und Weiterbildungen sind Gegenstand der Unteransprüche. Der nebengeordnete Anspruch 9 betrifft eine Batterieladestation mit einem erfindungsgemäßen variablen Tiefsetzer.

Um einen effizienten variablen Tiefsetzer mit wenig Verlusten in Speicherspulen zu erlauben, weist bei einer vorteilhaften Ausführungsform des Tiefsetzer ein Spannungsausgang von jedem der zweiten Spannungswandler eine Diode auf, wobei die Reihenschaltung eine Reihenschaltung der Dioden zum Spannungsausgang des variablen Tiefsetzers ist.

Die erfindungsgemäß vorgesehenen ersten und zweiten Steuerungen können in zwei Baueinheiten oder kombiniert in einer Baueinheit vorgesehen sein.

Die Erfindung verfolgt damit einen Weg, bei dem durch Kaskadierung und Zuschalten von nicht gesteuerten regelten Teilen die Verluste reduziert werden.

Die Ausgangsspannung liegt typischerweise bei einigen hundert Volt (V), insbesondere 200 bis 750 Volt bei Stromstärken bis im Bereich von typischerweiser bis zu etwa 1.000 Ampere (A).

Ein Transformator des Tiefsetzers zur Aufteilung einer Eingangsspannung in mehrere Teilspannungen umfasst bei einer vorteilhaften Ausführungsform eine Primärwicklung und die ersten und zweiten Sekundärwicklungen, wobei von der Summe der Teilspannungen 10 bis 40%, insbesondere 25 bis 35 % an dem ersten Spannungseingang anliegen.

Vorteilhaft liegt n, die Anzahl der nicht geregelten bzw. zweiten Spannungswandler, zwischen 2 und 4 und beträgt beispielsweise 2 oder 3.

Die pulsweitenmodulierten Signale arbeiten vorteilhaft im Bereich von 5 bis 30, weiter vorteilhaft 5 bis 20 kHz.

Der erfindungsgemäße Tiefsetzer kann besonders vorteilhaft bei einer Batterieladestation für batteriebetriebene Straßenfahrzeuge verwendet werden. Weitere Einzelheiten und Vorteile der Erfindung ergeben sich aus der nachfolgenden rein beispielhaften und nichtbeschränkenden Beschreibung eines Ausführungsbeispiels in Verbindung mit der Zeichnung.

### KURZE BESCHREIBUNG DER ZEICHNUNGEN

- Fig. 1: zeigt schematisiert einen als Abwärtswandler, Tiefsetzsteller, Abwärtsregler, Buck-Converter oder Tiefsetzer bekannten Spannungswandler gemäß dem Stand der Technik.
- Fig. 2: zeigt schematisiert eine Kaskadierung von zwei der in Fig. 1 gezeigten Spannungswandler.
- Fig. 3 und 4: zeigen stark schematisiert Schaltbilder variabler Tiefsetzer gemäß der Erfindung.

### BESCHREIBUNG BEVORZUGTER AUSFÜHRUNGSFORMEN

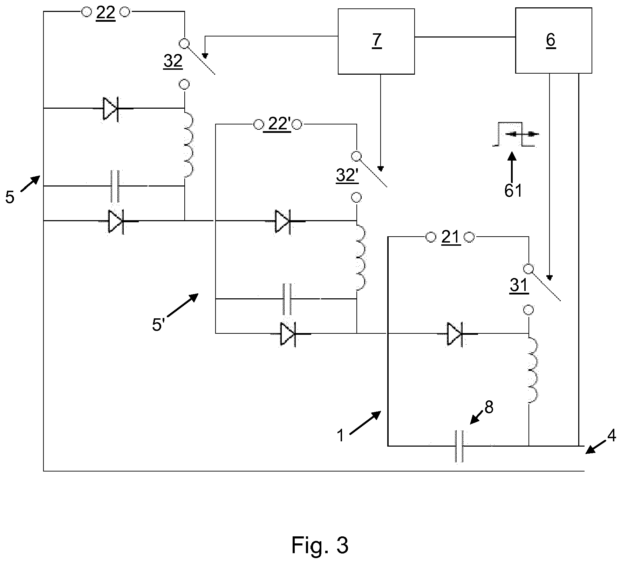

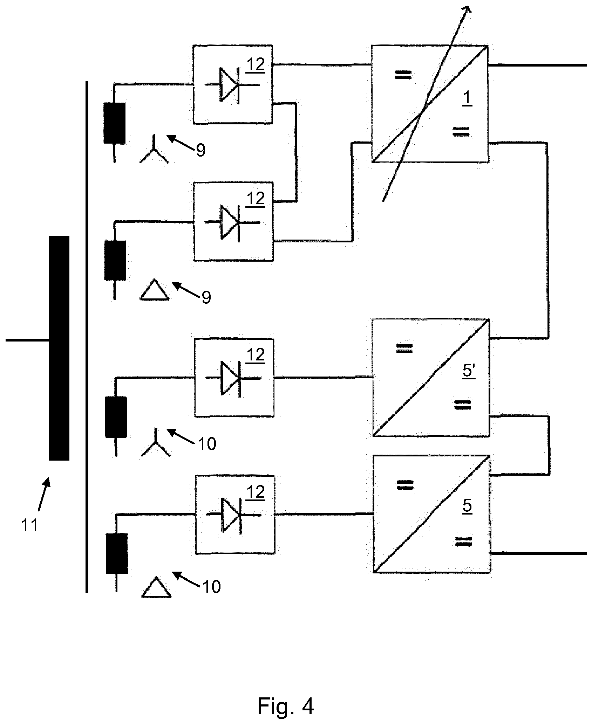

Die in den Fig. 3 und 4 gezeigten variablen Tiefsetzer kombinieren eine Kaskadierung von nicht regelbaren Spannungswandlern 5, 5' mit einem regelbaren Spannungswandler 1. Die Spannungswandler 5, 5' und 1 sind kaskadiert, indem der gemeinsame Spannungsausgang der beiden kaskadierten nicht regelbaren Spannungswandler 5 und und 5' mit dem Spannungsausgang des regelbaren Spannungswandler 1 zusammengeschaltet wird, um einen gemeinsamen Spannungsausgang 4 der Spannungswandler 5, 5' und 1 und damit des variablen Tiesetzers zu erhalten.

Der erfindungsgemäße variable Tiefsetzer umfasst den Spannungsausgang 4, den regelbaren Spannungswandler 1 mit einem ersten Spannungseingang 21 und einem ersten Schalter 31 und, wie in Fig. 4 dargestellt, zwei erste Sekundärwicklungen 9, die über eine Reihenschaltung von zwei Pulsgleichrichtern 12 mit dem Spannungseingang 21 des regelbaren Spannungswandlers 1 verbunden sind.

Der Tiefsetzer umfasst ferner eine erste Steuerung 6 des regelbaren Spannungswandlers 1 mit Erfassung einer Ist-Spannung an dem Spannungsausgang des variablen Tiefsetzers, Abfrage einer Soll-Spannung und Ausgabe eines ersten Steuersignals 61 an den Schalter 31 des regelbaren Spannungswandlers 1 zum Angleichen der Ist-Spannung an die Soll-Spannung, wobei das Signal 61 als pulsweitenmoduliertes Rechtecksignal ausgebildet ist.

Der veranschaulichte erfindungsgemäße variable Tiefsetzer weist ferner zwei nicht regelbare Spannungswandler 5, 5' mit je einem zweiten Spannungseingang 22, 22' und einem zweiten Schalter 32, 32' auf. Wie in Fig. 4 veranschaulicht, sind zwei zweite Sekundärwicklungen 10 über Pulsgleichrichter 12 mit jeweils einem der Spannungseingänge der nicht regelbaren Spannungswandler 5, 5' verbunden. Der regelbare Spannungswandler 1 und die nicht regelbaren Spannungswandler 5, 5' sind kaskadiert.

Eine zweite Steuerung 7 dient zur Ausgabe der Soll-Spannung an die erste Steuerung 6 und zur Ausgabe eines Satzes von n zweiten Steuersignalen zum sanften Anlauf des variablen Tiefsetzers und zum statischen Einschalten der Schalter 32, 32' vorgesehen. Dabei wird je ein Steuersignal für jeden der zweiten Schalter 32, 32' ausgegeben, wobei der Satz von n zweiten Steuersignalen definiert, wie viele der nicht regelbaren Spannungswandler 5, 5' mit dem regelbaren Spannungswandler 1 bei der Kaskadierung in Reihe zum Spannungsausgang 4 des variablen Tiefsetzers geschaltet sind. Selbstverständlich können mehr als zwei nicht regelbare Spannungswandler kaskadiert werden, um so verschiedene gewünschte Ausgangsspannung mit möglichst geringer Verlustleistung realisieren zu können. Der erste Schalter 31 und/oder die zweiten Schalter 32, 32' sind bevorzugt als Halbleiterschalter ausgebildet.

Da mehrere Spannungswandler verwendet werden, die für sich genommen jeweils einer im Vergleich zum gesamten Tiefsetzer kleinen Last unterliegen, können für die Schalter jeweils Schalter geringerer Spannungsfestigkeit verwendet werden, die preisgünstiger sind, als ein Schalter für einen Spannungswandler, der mit einem einzigen Spannungswandler die gleiche Wandlungsleistung erbringt wie der erfindungsgemäße Tiefsetzer. Dadurch ergibt sich ein erheblicher Kostenvorteil bei den Herstellungskosten. Im Betrieb ergibt sich dann aus mehreren Gründen ein erheblicher Betriebskostenvorteil. So erzeugen mehrere Schalter mit jeweils geringer Spannungsfestigkeit geringere Verluste als ein einziger Schalter hoher Spannungsfestigkeit. Zudem erzeugen nicht regelbare Spannungswandler generell geringere Verluste als regelbare, und bei regelbaren Spannungswandlern steigen die Verluste proportional zur Ausgangsspannung. Ein regelbarer Spannungswandler, der Spannungen von z.B. 0 bis 1.000 V ausgeben kann, erzeugt höhere Verluste als ein erfindungsgemäßer Tiefsetzer, der ebenfalls Spannungen von 0 bis 1.000 V ausgeben kann, aber aus einem kaskadierten System aus z.B. drei nicht regelbaren Spannungswandlern, die jeweils 250 V ausgeben können, und einem regelbaren Spannungswandler, der Spannungen von 0 bis 250 V ausgeben besteht.

Eine Spannung, die durch einen Tiefsetzer zu reduzieren ist, wird am Eingang in mehrere Teilspannungen aufgeteilt. Dies erfolgt bei dem in den Fig. 3 und 4 veranschaulichten Beispiel durch einen Transformator mit einer Primärwicklung 11 und mehreren Sekundärwicklungen 9, 10, wobei Netzrückwirkungen reduziert werden, indem die Sekundärwicklungen in unterschiedlichen Wickelformen, insbesondere mit Stern und Dreiecksschaltung ausgeführt sind. Statt der von der Primärwicklung 11 erhältlichen Gesamtspannung werden so Teilspannungen tiefgesetzt und in Reihe geschaltet. Ist, wie im Beispiel gezeigt, ein System aus n (n= 2) nicht regelbaren Spannungswandlern und einem einzigen regelbaren Spannungswandler vorgesehen, so kann vorgesehen werden, dass die genannte Gesamtspannung von der Primärwicklung 11 in n+1, im Beispiel also drei gleichgroße Teilspannungen aufgeteilt wird, von denen eine an dem ersten Spannungseingang 21 anliegt und jeweils eine der beiden anderen an einem der zweiten Spannungseingänge 22, 22' anliegt. Die Gesamtspannung muss aber nicht in gleichgroße Teilspannungen aufgeteilt werden. Vielmehr erlaubt es die Erfindung der Fachmann vorteilhaft, eine für den jeweiligen Anwendungsfall optimale Kombination regelbarer und nicht regelbarer Spannungswandler zusammenzustellen.

Wie in Fig. 4 veranschaulicht, sind die ersten und zweiten Sekundärwicklungen 9, 10 jeweils über Pulsgleichrichter 12 mit den ersten bzw. zweiten Spannungseingängen verbunden, wobei jede der zweiten Sekundärwicklungen 10 Teil einer Stern- bzw. einer Dreiecksschaltung ist (wie durch das Stern- bzw. Dreieckssymbol angedeutet), wobei in der Kaskadierung eine Kaskadierung der zweiten Spannungswandler 5, 5' vorgesehen ist, in der den zweiten Spannungswandlern 5, 5' alternierend Stern- und Dreiecksschaltungen zugeordnet sind, welche jeweils mit den Spannungseingängen 22 der zweiten Spannungswandler 5, 5' verbunden sind.

Die beiden ersten Sekundärwicklungen 9 sind je Teil einer Stern- bzw. einer Dreiecksschaltung, wobei diese Sternschaltung und diese Dreiecksschaltung mit den beiden ersten Sekundärwicklungen 9 über zwei Pulsgleichrichter 12, die in Reihe geschaltet sind, mit dem ersten Spannungseingang 21 verbunden sind.

Um einen bestimmten Spannungsbereich zu erzeugen reicht es, wenn von N Teilsystemen in Form von Spannungswandlern N-1 Teilsysteme ungeregelt arbeiten. Nur eine Differenz zur gewünschten Ausgangsspannung muss mit einem Teilsystem geregelt werden. Da ungeregelte Teilsysteme weniger Verluste erzeugen als geregelte, ergibt sich die gewünschte Verlustreduktion. Durch Zu- und Abschalten von Teilsystemen kann so mit reduzierter Verlustleistung der gesamte Bereich von 0 V bis zu einer Maximalspannung eingestellt bzw. geregelt werden.

Bei dem mit Fig. 3 und 4 veranschaulichten variablen Tiefsetzer sind die ersten und zweiten Steuerungen 6, 7 als getrennte Einheiten ausgeführt. Diese Steuerungen können aber auch gemeinsam als eine technische Einheit ausgeführt werden, insbesondere in Form eines Hardwarebaustein, vorzugsweise in Form eines digitalen Signalprozessors.

### BEZUGSZEICHENLISTE

- 1, 1': regelbare Spannungswandler
- 2: Spannungseingang
- 21: erster Spannungseingang
- 22, 22': zweite Spannungseingänge
- 3: Schalter
- 31: erster Schalter
- 32, 32': zweite Schalter
- 4: Spannungsausgang
- 5, 5': nicht regelbare Spannungswandler
- 6: erste Steuerung
- 61: erstes Steuersignal
- 7: zweite Steuerung
- 8: Elektrolytkondensator
- 9: erste Sekundärwicklung
- 10: zweite Sekundärwicklung
- 11: Primärwicklung
- 12: Gleichrichter

## Patentansprüche

1. Variabler Tiefsetzer, umfassend
- einen Spannungsausgang (4),
- wenigstens einen ersten, regelbaren Spannungswandler (1) mit einem ersten Spannungseingang (21) und einem ersten Schalter (31),
- wenigstens eine erste Sekundärwicklung (9), die mit dem ersten Spannungseingang (21) verbunden ist,
- eine erste Steuerung (6) des regelbaren Spannungswandlers (1) mit
-- Erfassung einer Ist-Spannung und eines Ist-Stromes an dem Spannungsausgang des variablen Tiefsetzers,
-- Abfrage einer Soll-Spannung und
-- Ausgabe an den Schalter (31) des regelbaren Spannungswandlers (1) von einem ersten Steuersignal (61) zum Angleichen der Ist-Spannung an die Soll-Spannung,
**gekennzeichnet durch**
- eine gerade Anzahl von n zweiten Spannungswandlern in Form nicht regelbarer Spannungswandler (5, 5') mit jeweils einem zweiten Spannungseingang (22, 22') und jeweils einem zweiten Schalter (32, 32'),
- zweite Sekundärwicklungen (10), wobei jede zweite Sekundärwicklung (10) mit jeweils einem der zweiten Spannungseingänge (22) über einen Pulsgleichrichter (12) verbunden ist und jede der zweiten Sekundärwicklungen (10) Teil einer Stern oder einer Dreiecksschaltung ist,
- eine Kaskadierung der ersten und zweiten Spannungswandler (1, 5, 5'), wobei in der Kaskadierung eine Kaskadierung der zweiten Spannungswandler (5. 5') vorgesehen ist, in der den zweiten Spannungswandlern (5, 5') alternierend Stern- und Dreiecksschaltungen zugeordnet sind, welche jeweils mit den Spannungseingängen (22, 22') der zweiten Spannungswandler (5, 5') verbunden sind,
- eine zweite Steuerung (7) zur Ausgabe der Soll-Spannung an die erste Steuerung (6) und zur Ausgabe eines Satzes von n zweiten Steuersignalen mit einem Steuersignal für jeden der zweiten Schalter (32, 32'), wobei der Satz von n zweiten Steuersignalen definiert, wie viele der n zweiten Spannungswandler (5, 5') mit dem wenigstens einen regelbaren Spannungswandler (1) bei der Kaskadierung mit einer Reihenschaltung in Reihe zum Spannungsausgang (4) des variablen Tiefsetzers geschaltet sind,
- wobei zwei erste Sekundärwicklungen (9) vorgesehen sind, von denen eine Teil einer Stern- und eine Teil einer Dreiecksschaltung ist, wobei die beiden ersten Sekundärwicklungen (9) über eine Reihenschaltung von zwei weiteren Pulsgleichrichtern (12) mit dem ersten Spannungseingang (21) verbunden sind.

2. Variabler Tiefsetzer nach Anspruch 1, wobei Spannungen und Stromstärken an dem Spannungsausgang (4) in einem Bereich vorgesehen sind, der zwischen 500 und 750 V bei bis zu etwa 1.000 A liegt.

3. Variabler Tiefsetzer nach Anspruch 1 oder 2, wobei in der zweiten Steuerung (7) eine Pulsweitenmodulation der zweiten Steuersignale für einen sanften Anlauf bei einem Zuschalten von einem oder mehreren der zweiten Spannungswandler (5, 5') in der Kaskadierung vorgesehen ist.

4. Variabler Tiefsetzer nach einem der vorhergehenden Ansprüche, wobei die die ersten und/oder zweiten Schalter (31, 32, 32') als Halbleiterschalter ausgebildet sind.

5. Variabler Tiefsetzer nach einem der vorhergehenden Ansprüche, umfassend einen Transformator, der zur Aufteilung einer Eingangsspannung in mehrere Teilspannungen eine Primärwicklung (11) und die ersten und zweiten Sekundärwicklungen (9, 10) umfasst.

6. Variabler Tiefsetzer nach einem der vorhergehenden Ansprüche, wobei n+1 Teilspannungen, insbesondere gleichgroße Teilspannungen, vorgesehen sind, von denen eine an dem ersten Spannungseingang (21) anliegt und je eine an jedem der zweiten Spannungseingänge (22, 22') anliegt.

7. Variabler Tiefsetzer nach einem der vorhergehenden Ansprüche, wobei n zwischen 2 und 4 liegt.

8. Variabler Tiefsetzer nach einem der vorhergehenden Ansprüche, wobei von jedem der zweiten Spannungswandler (5, 5') ein Spannungsausgang eine Diode aufweist, wobei die Reihenschaltung eine Reihenschaltung der Dioden zum Spannungsausgang (4) des variablen Tiefsetzers ist.

9. Batterieladestation insbesondere für batteriebetriebene Straßenfahrzeuge, umfassend einen variablen Tiefsetzer nach einem der vorhergehenden Ansprüche.

## Claims

1. A variable step-down converter, comprising
- a voltage output (4),
- at least one first controllable voltage converter (1) having a first voltage input (21) and a first switch (31),
- at least one first secondary winding (9) connected to the first voltage input (21),
- a first controller (6) of the controllable voltage converter (1), including
-- detecting an actual voltage and an actual current at the voltage output of the variable step-down converter,
-- retrieving a target voltage, and
-- outputting a first control signal (61) for equalizing the actual voltage to the target voltage to the switch (31) of the controllable voltage converter (1),
**characterized in**
- an even number of n second voltage converters in the form of not controllable voltage converters (5, 5') each having a second voltage input (22, 22') and a second switch (32, 32'),
- second secondary windings (10) wherein each second secondary winding (10) is connected with each one of the second voltage inputs (22) via a pulse rectifier (12) and each of the second secondary windings (10) is part of a star or a delta connection,
- a cascading of the first and second voltage converters (1, 5, 5'), wherein the cascading is provided with a cascading of the second voltage converters (5, 5') wherein the second voltage converters (5, 5') are assigned alternately star and delta connections, which in each case are connected with the voltage inputs (22, 22') of the second voltage converters (5, 5'),
- a second controller (7) for outputting the target voltage to the first controller (6) and for outputting a set of n second control signals with one control signal for each of the second switches (32, 32'), wherein the set of n second control signals defines how many of the n second voltage converters (5, 5') with the at least one controllable voltage converter (1) are connected in series with the voltage output (4) of the variable step-down converter during the cascading with a series connection,
- wherein two first secondary windings (9) are provided, one of which being part of a star connection and one of which being part of a delta connection, wherein the first two secondary windings (9) are connected to the first voltage input (21) via a series connection of two further pulse rectifiers (12).

2. The variable step-down converter according to Claim 1, wherein voltages and currents at the voltage output (4) are provided in a range between 500 and 750 V at up to about 1,000 A.

3. The variable step-down converter according to Claim 1 or 2, wherein a pulse width modulation of the second control signals is provided in the second control (7) for a soft start when connecting one or more of the second voltage converters (5, 5') in the cascading.

4. The variable step-down converter according to any one of the preceding claims, wherein the the first and/or second switches (31, 32, 32') are formed as semiconductor switches.

5. The variable step-down converter according to any one of the preceding claims, comprising a transformer comprising a primary winding (11) and the first and second secondary windings (9, 10) for splitting an input voltage into several partial voltages.

6. The variable step-down converter according to any one of the preceding claims, wherein n + 1 partial voltages, in particular partial voltages of equal magnitude, are provided, one of which being applied to the first voltage input (21) and one each being applied to each of the second voltage inputs (22, 22').

7. The variable step-down converter according to any one of the preceding claims, wherein n is between 2 and 4.

8. The variable step-down converter according to any one of the preceding claims, wherein a voltage output of each of the second voltage converters (5, 5') has a diode wherein the series connection is a series connection of the diodes to the voltage output (4) of the variable step-down converter.

9. A battery charging station, in particular for battery-operated road vehicles, comprising a variable step-down converter according to any one of the preceding claims.

## Revendications

1. Convertisseur abaisseur variable comprenant
- une sortie de tension (4),
- au moins un premier transformateur de tension (1) réglable ayant une première entrée de tension (21) et un premier commutateur (31),
- au moins un premier enroulement secondaire (9) qui est connecté à la première entrée de tension (21),
- une première commande (6) du transformateur de tension (1) réglable avec
-- détecter une tension réelle et un courant réel sur la sortie de tension du convertisseur abaisseur variable,
-- interroger une tension de consigne et
-- délivrer au commutateur (31) du transformateur de tension (1) réglable un premier signal de commande (61) pour adapter la tension réelle à la tension de consigne,
**caractérisé par**
- un nombre pair de n deuxièmes transformateurs de tension sous forme de transformateurs de tension (5, 5') non réglables ayant chacun une deuxième entrée de tension (22, 22') et ayant chacun un deuxième commutateur (32, 32'),
- de deuxièmes enroulements secondaires (10), dans lequel chaque deuxième enroulement secondaire (10) est connecté via un redresseur d'impulsions (12) à l'une des deuxièmes entrées de tension (22) respectivement, et chacun des deuxièmes enroulements secondaires (10) fait partie d'un montage en étoile ou en triangle,
- un montage en cascade des premier et deuxièmes transformateurs de tension (1, 5, 5'), dans ledit montage en cascade étant prévu un montage en cascade des deuxièmes transformateurs de tension (5, 5') dans lequel des montages en étoile et en triangle sont associés en alternance aux deuxièmes transformateurs de tension (5, 5'), qui sont connectés chacun aux entrées de tension (22, 22') des deuxièmes transformateurs de tension (5, 5'),
- une deuxième commande (7) pour délivrer la tension de consigne à la première commande (6) et pour délivrer un ensemble de n deuxièmes signaux de commande avec un signal de commande pour chacun des deuxièmes commutateurs (32, 32'), ledit ensemble de n deuxièmes signaux de commande définissant combien des n deuxièmes transformateurs de tension (5, 5') avec ledit au moins un transformateur de tension (1) réglable sont montés en série, dans le montage en cascade avec un montage en série, par rapport à la sortie de tension (4) du convertisseur abaisseur variable,
- dans lequel deux premiers enroulements secondaires (9) sont prévus dont l'un fait partie d'un montage en étoile et l'un fait partie d'un montage en triangle, les deux premiers enroulements secondaires (9) étant connectés en série avec la première entrée de tension (21) via un montage en série de deux autres redresseurs d'impulsions (12).

2. Convertisseur abaisseur variable selon la revendication 1, dans lequel des tensions et des intensités de courant sont prévues au niveau de la sortie de tension (4) dans une plage qui est comprise entre 500 et 750 V à une valeur allant jusqu'à 1.000 A à peu près.

3. Convertisseur abaisseur variable selon la revendication 1 ou 2, dans lequel on prévoit, dans la deuxième commande (7), une modulation d'impulsion en largeur des deuxièmes signaux de commande pour un démarrage doux lors d'une mise en circuit d'un ou de plusieurs des deuxièmes transformateurs de tension (5, 5') dans le montage en cascade.

4. Convertisseur abaisseur variable selon l'une quelconque des revendications précédentes, dans lequel les premier et/ou deuxièmes commutateurs (31, 32, 32') sont conçus en tant que commutateurs à semi-conducteur.

5. Convertisseur abaisseur variable selon l'une quelconque des revendications précédentes, comprenant un transformateur qui comprend un enroulement primaire (11) et les premier et deuxième enroulements secondaires (9, 10) pour diviser une tension d'entrée en une pluralité de tensions partielles.

6. Convertisseur abaisseur variable selon l'une quelconque des revendications précédentes, dans lequel n + 1 tensions partielles, en particulier des tensions partielles égales sont prévues dont l'une est appliquée à la première entrée de tension (21) et respectivement une est appliquée à chacune des deuxièmes entrées de tension (22, 22').

7. Convertisseur abaisseur variable selon l'une quelconque des revendications précédentes, dans lequel n est compris entre 2 et 4.

8. Convertisseur abaisseur variable selon l'une quelconque des revendications précédentes, dans lequel une sortie de tension de chacun des deuxièmes transformateurs de tension (5, 5') comprend une diode, le montage en série étant un montage en série des diodes par rapport à la sortie de tension (4) du convertisseur abaisseur variable.

9. Station de charge de batterie, en particulier pour véhicules routiers propulsé par batteries, comprenant un convertisseur abaisseur variable selon l'une quelconque des revendications précédentes.
